# EUROPÄISCHE PATENTSCHRIFT

(11) **EP 3 087 630 B1**
(45) Veröffentlichungstag und Bekanntmachung des Hinweises auf die Patenterteilung: **29.08.2018**
(21) Anmeldenummer: 14802894.7
(22) Anmeldetag: 26.11.2014
(51) Int. Cl.: H01M 4/04, H01M 4/38, H01M 4/12, H01M 4/134, H01M 4/66, H01M 4/70, H01M 10/04, H01M 10/0525, H01M 6/40, H01M 12/04, H01M 4/02

(54) **VERFAHREN ZUM HERSTELLEN EINER BATTERIE**
METHOD FOR PRODUCING A BATTERY
PROCÉDÉ PERMETTANT DE PRODUIRE UNE BATTERIE

(30) Priorität: 23.12.2013 DE 102013114767
(43) Veröffentlichungstag der Anmeldung: 02.11.2016
(73) Patentinhaber: Universität Stuttgart, 70174 Stuttgart (DE)
(72) Erfinder: WERNER, Juergen, H., 70197 Stuttgart (DE); SCHUBERT, Markus, 72074 Tübingen (DE); KOEHLER, Juergen, 71332 Waiblingen (DE); GARAMOUN, Ahmed, 70565 Stuttgart (DE); SÄMANN, Christian, 70178 Stuttgart (DE)
(74) Vertreter: Witte, Weller & Partner Patentanwälte mbB
(86) Internationale Anmeldenummer: PCT/EP2014/075659
(87) Internationale Veröffentlichungsnummer: WO 2015/096948

(56) Entgegenhaltungen:
- WO-A1-2004/086539
- WO-A1-2011/053736
- US-A1- 2013 136 973

## Beschreibung

Die Erfindung betrifft ein Verfahren zum Herstellen einer Batterie, mit den Schritten:
- Herstellen einer ersten Elektrode durch Bereitstellen eines Substrats und Abscheiden mindestens einer Halbleiterschicht auf dem Substrat;
- Erzeugung einer bestimmten Porosität über einen bestimmten Bereich der Halbleiterschicht;
- Anordnen der ersten Elektrode zusammen mit einer zweiten Elektrode und einem Elektrolyten in einem Gehäuse;
- Kontaktieren der beiden Elektroden und Verbinden mit externen, von außerhalb des Gehäuses zugänglichen Anschlüssen.

Ein derartiges Verfahren ist aus der US 2010/0221606 A1 bekannt.

Hiernach wird zunächst ein elektrisch leitfähiges Substrat bereitgestellt und hierauf eine Halbleiterschicht abgeschieden, die anodisiert wird, wodurch Poren in der Halbleiterschicht gebildet werden. Die so gebildete erste Elektrode besitzt eine vergrößerte Oberfläche. Sie wird mit einer zweiten Elektrode und einem Elektrolyten kombiniert, um eine Batterie bereitzustellen. Bei dem Substrat kann es sich um eine endlose Folie handeln, die zu einer zylindrischen Form aufgerollt werden kann. Durch die Anodisierung wird die Oberfläche der Halbleiterschicht vergrößert, um eine kontrollierte, poröse Struktur zu bilden.

Bei der Entwicklung von wiederaufladbaren Lithium-Ionen-Batterien wurde bislang beim Anodenmaterial auf Kohlenstoffmaterial mit hoher Oberfläche gesetzt, wie etwa auf Mesocarbon Microbeads (MCMB), um eine möglichst hohe Leistungsdichte zu erzielen.

Allerdings ist die Leistungsdichte von kohlenstoffbasiertem Material ziemlich begrenzt.

Aus diesem Grund werden seit einiger Zeit andere Anodenmaterialien auf der Basis von Silizium entwickelt. Anders als bei der Einlagerung von Lithium zwischen einzelnen Kohlenstofflagen bildet Silizium eine Legierung mit Lithium. Negative Elektroden auf der Basis von Silizium sind wegen ihrer hohen theoretischen spezifischen Kapazität interessant, die deutlich höher als diejenige von Kohlenstoff liegt.

Allerdings besteht ein besonderes Problem bei der Verwendung von Silizium als Elektrodenmaterial in der erheblichen Volumenvergrößerung, die durch die Aufnahme von Atomen bedingt ist, was zu Spannungen, zur Rissbildung und letztlich zum Versagen der Elektrode führen kann. Aus diesem Grunde wurde etwa bei der eingangs genannten US 2010/0221606 A1 versucht, die Siliziumelektrode mit einer kontrollierten Porosität herzustellen, um die Volumenvergrößerung bei der Aufnahme von Lithium zu begrenzen. Der hierbei verwendete Anodisierungsschritt ist allerdings nicht ausreichend, um einem Aufquellen der Siliziumschicht ausreichend entgegenzuwirken.

Aus der US 2012/0231326 A1 ist ein weiteres Verfahren zum Herstellen einer wiederaufladbaren Batterie mit einer Anode aus einer porösen Siliziumschicht bekannt. Hierbei wird die poröse Siliziumschicht durch elektrochemisches Ätzen und nachfolgendes Beschichten mit einer Passivierungsschicht erzeugt. Um die poröse Siliziumschicht zu erhalten, wird eine bestimmte Ätzbehandlung durchgeführt.

Allerdings ist das Herstellverfahren kompliziert und dennoch das Potential zur Begrenzung der Volumenvergrößerung bei der Aufnahme von Lithiumionen begrenzt. Auch bei einer aus der US 2013/0078508 A1 bekannten Lithium-Ionen-Batterie wird eine Anode mit porösem Silizium verwendet. Die Anode besteht vorzugsweise in der Form von Nanofasern, einer Folie oder eines Pulvers mit porösem Silizium mit Porendurchmessern im Bereich von 2 nm bis 100 nm und einer durchschnittlichen Wandstärke im Bereich von 1 nm bis 100 nm. Zur Herstellung der porösen Siliziumschicht wird ein Ätzverfahren verwendet.

Auch hierbei ist das Herstellverfahren aufwändig und dennoch die Kapazität der Siliziumschicht zur Aufnahme von Ionen relativ begrenzt.

Daneben sind als Alternative zu Lithium-Ionen-Sekundärbatterien auch nicht wiederaufladbare Metall/Luftbatterien in der Entwicklung. Seit einiger Zeit wird an der Entwicklung von Silizium/Luftbatterien gearbeitet, die eine hohe theoretische Energiedichte von 8470 Wh/kg haben.

Auch hierbei stellt die Volumenvergrößerung der Siliziumschicht bei der Aufnahme von Ionen eines der zentralen Probleme dar.

Aus der WO 2004/086539 A1 sind ein Elektrodenmaterial für wiederaufladbare Lithiumbatterien sowie eine Elektrodenstruktur mit einem solchen Material bekannt. Das Elektrodenmaterial wird pulvertechnologisch hergestellt.

Aus der US 2013/0136973 A1 ist ferener eine wiederaufladbare Lithiumionenbatterie mit einer Soliziumanode bekannt. Eine Seite der Siliziumanode ist mit einer Mehrzahl von Öffnungen versehen, die durch Laserbohren hergestellt sind.

Vor diesem Hintergrund liegt der Erfindung die Aufgabe zugrunde, ein Verfahren zum Herstellen einer Batterie mit einer verbesserten Elektrode auf Siliziumbasis anzugeben, die eine große Kapazität zur Aufnahme von Metallionen aufweist, ohne dass eine damit verbundene Volumenvergrößerung zu einer Beschädigung der Elektrode führt. Die Herstellung soll möglichst wirtschaftlich sein und auch eine Massenproduktion erlauben.

Diese Aufgabe wird durch ein Verfahren zum Herstellen einer Batterie mit den Merkmalen des Anspruchs 1 gelöst.

Die Aufgabe der Erfindung wird auf diese Weise vollkommen gelöst.

Dadurch, dass die zumindest teilweise poröse Halbleiterschicht auf Siliziumbasis unter Verwendung von Laserstrahlung mikrostabilisiert ist, hat die so modifizierte Halbleiterschicht ein besonders hohes Potential zu Ionenaufnahme, bei gleichzeitig gegenüber dem Stand der Technik verbesserter mechanischer Stabilität. Eine derartige poröse Schicht auf Siliziumbasis kann sowohl bei Sekundärbatterien als auch bei Primärbatterien eingesetzt werden.

Unter einer Mikrostabilisierung der Halbleiterschicht wird im Sinne der vorliegenden Erfindung eine Stabilisierung gegenüber einem Aufquellen bzw. einer Volumenvergrößerung oder eine Erhöhung der mechanischen Stabilität durch einen bestimmten Verfahrensschritt verstanden.

Die Halbleiterschicht kann mittels des Lasers lokal bestrahlt werden, um die Freisetzung von Gasen aus der zuvor abgeschiedenen Halbleiterschicht zu bewirken und so eine Erhöhung der Porosität oder eine bestimmte Porosität ausgehend von dichtem Material zu erreichen.

Die Behandlung mittels Laserstrahlung bewirkt eine dreidimensionale Mikrostabilisierung der Halbleiterschicht.

Je nach Art der verwendeten Laserstrahlung lässt sich hierbei eine Variation in weiten Grenzen ermöglichen, um eine besonders vorteilhafte Mikrostabilisierung der Halbleiterschicht zu erzielen.

Eine weitere Möglichkeit zur Mikrostabilisierung besteht in der Erzeugung von lokal unterschiedlich dotierten Bereichen, vorzugsweise mittels Laserunterstützung, bevorzugt von p-Typ-dotierten Bereichen auf einer n-Typ-dotierten Halbleiterschicht. p-Typ-dotierte Bereiche lagern weniger Ionen, insbesondere weniger Lithium-Ionen ein. Damit können diese Bereiche als Stützstellen dienen, wenn die übrigen Bereiche eine Volumenvergrößerung durch Ioneneinlagerung erfahren, und somit die Halbleiterschicht mechanisch stabilisieren. Bei lokal n-Typ-dotierten Bereichen ist diese Tendenz weniger ausgeprägt, jedoch grundsätzlich auch vorhanden.

Mittels der Laserbestrahlung können lokal dotierte Bereiche auf besonders einfache Weise erzeugt werden, ohne dass hierzu Lithographieschritte bzw. Maskierungsschritte notwendig sind.

Eine weitere Möglichkeit zur Mikrostabilisierung besteht in der Erzeugung von lokal verfestigten Gitterpunkten durch lokale Kristallisation. Dies wird durch lokale Bestrahlung mittels eines Lasers erreicht, was zum lokalen Aufschmelzen und zur lokalen Kristallisation und damit zur Stabilisierung führt.

Auch auf diese Weise lässt sich eine dreidimensionale Mikrostabilisierung der Halbleiterschicht erzielen. Durch die lokale Kristallisation an lokal verfestigten Gitterpunkten lässt sich eine stabile dreidimensionale Mikrostabilisierung der Halbleiterschicht gewährleisten.

Es versteht sich, dass bevorzugt mehrere Schichten nacheinander übereinander abgeschieden und mikrostabilisiert werden können, so dass auf diese Weise auch dickere Schichten in der erfindungsgemäßen Weise hergestellt bzw. behandelt werden können.

Gemäß einer weiteren Ausgestaltung der Erfindung wird eine Halbleiterschicht zur Vergrößerung der Porosität aktiver Bereiche zur Aufnahme von Ionen, insbesondere von Lithium-Ionen, oder zur Verringerung der Porosität inaktiver Bereiche zur Verringerung der Einlagerung von Ionen behandelt.

Werden aktive Bereiche behandelt, so kann die Porosität lokal erhöht werden, was die lonenaufnahmekapazität erhöht. Umgekehrt kann durch Verringerung der Porosität inaktiver Bereiche eine Stabilisierung einer größeren Struktur mit dazwischen angeordneten Bereichen größerer Porosität mit hoher lonenaufnahmekapazität erreicht werden.

Gemäß einer weiteren Ausgestaltung der Erfindung wird die Halbleiterschicht in Form eines dreidimensionalen Skeletts mit einer Gitterweite von 0,5 bis 100 µm, vorzugsweise von 5 bis 20 µm, mikrostabilisiert.

Mit einer derartigen Dimensionierung lässt sich eine besonders stabile Halbleiterschicht gewährleisten, die ein großes lonen-Aufnahmepotential, insbesondere für Lithiumionen aufweist und gleichzeitig eine hohe Stabilität bei geringer Volumenzunahme.

Gemäß einer weiteren Ausgestaltung der Erfindung wird die Halbleiterschicht durch ein Dünnschichtabscheideverfahren abgeschieden. Es kann sich hierbei etwa um Sprühen, Drucken oder ein Vakuumabscheideverfahren, insbesondere PVD (insbesondere Sputtern oder Aufdampfen), PECVD oder CVD handeln.

Besonders bevorzugt ist hierbei eine Erzeugung mittels PECVD mit Anregungsfrequenzen im Bereich von 10 kHz bis 500 MHz oder im Mikrowellenbereich.

Gemäß einer weiteren Ausgestaltung der Erfindung wird als Substrat eine bevorzugt texturierte Folie verwendet, vorzugsweise eine Metallfolie oder eine Kunststofffolie.

Hierdurch lässt sich eine besonders einfache und kostengünstige Herstellung und ein breiter Anwendungsbereich erzielen.

Als Substrat kann hierbei etwa eine Kunststofffolie verwendet werden, die in einem nachfolgenden Schritt metallisiert und kontaktiert wird, wobei zur Metallisierung gegebenenfalls zunächst eine Haftvermittlerschicht, etwa aus Titan, appliziert werden kann.

Gemäß einer weiteren Ausgestaltung der Erfindung wird die erste Elektrode mit einer zweiten Elektrode in Form einer Luftkathode zu einer Primärbatterie kombiniert.

Gemäß einer alternativen Ausführung der Erfindung wird die Batterie als Sekundärbatterie hergestellt, wobei zwischen den Elektroden ein Separator angeordnet wird.

Bei einer erfindungsgemäßen Batterie kann die mikrostabilisierte Halbleiterschicht gemäß einer ersten Variante der Erfindung als Dünnschicht auf einem flexiblen Substrat einer Anode definiert werden, die mit einer Luftkathode zu einer Primärbatterie kombiniert ist.

Gemäß einer weiteren Ausführung der Erfindung ist die mikrostabilisierte Halbleiterschicht eine mit einer p- oder n-Typ-Dotierung versehene Dünnschicht, die aus der Gruppe ausgewählt ist, die aus Stickstoff, Phosphor, Arsen, Antimon, Bor, Aluminium, Gallium und Indium besteht.

Als Elektrolyt kann bevorzugt ein alkalischer Elektrolyt, insbesondere in Form einer KOH-Lösung verwendet werden. Natürlich können auch andere Elektrolyte, etwa in Form einer NaOH-Lösung verwendet werden.

Daneben ist es möglich, den Elektrolyten als nicht wässrigen Elektrolyten auszubilden, der aus der Gruppe ausgewählt ist, die aus einer Ionenflüssigkeit, einer Mischung aus einem nicht ionenhaltigen polaren Lösungsmittel und einem Kation und einem Anion, einem leitfähigen Polymer, einer oxydischen Keramik und Mischungen davon besteht.

Gemäß einer weiteren Ausführung der Erfindung ist der Elektrolyt in einem flexiblen Trägermaterial, insbesondere einem porösen Schaumstoff oder einem Tuchmaterial, enthalten.

Hierbei kann der Elektrolyt etwa in Form eines Gels ausgebildet sein.

Durch diese Merkmale wird ein einfacher und vorteilhafter Aufbau einer Batterie ermöglicht, insbesondere mit einem gewickelten Aufbau, wobei die beiden Elektroden zusammen mit dem Elektrolyten zu einer Wickelstruktur aufgewickelt sind. Vorzugsweise wird eine derartige Wickelstruktur in einem Gehäuse luftdicht gekapselt.

Gemäß einer weiteren Ausgestaltung der Erfindung ist die mikrostabilisierte Halbleiterschicht als mikrokristalline, mikroporöse Schicht ausgebildet, die vorzugsweise Poren mit einem mittleren Porendurchmesser von mindestens 0,05 µm, bevorzugt von mindestens 0,1 µm, weiter bevorzugt von mindestens 0,15 µm, weiter bevorzugt von mindestens 0,2 µm aufweist. Vorzugsweise beträgt der mittlere Porendurchmesser höchstens 5 µm, weiter bevorzugt von höchstens 2 µm.

Es hat sich gezeigt, dass ein derartiger Aufbau ein besonders hohes Potential zur Ionenaufnahme bei gleichzeitig geringer Volumenzunahme ermöglicht.

Gemäß einer alternativen Ausführung der Erfindung ist die Batterie als Sekundärbatterie ausgebildet, insbesondere als Lithium-Ionen-Batterie, mit einem Separator zur Trennung der beiden Elektroden.

Gemäß einer weiteren Ausgestaltung der Erfindung ist die mikrostabilisierte Halbleiterschicht mikroporös und weist vorzugsweise Poren mit einem mittleren Porendurchmesser von 0,02 µm bis 10 µm, weiter bevorzugt von 0,1 bis 1 µm auf.

Gemäß einer weiteren Ausgestaltung der Erfindung besteht die mikrostabilisierte Halbleiterschicht aus einer Mehrzahl von Einzelschichten, die übereinander angeordnet sind und vorzugsweise mit bekannten Verfahren der Dünnschichtabscheidung, beispielsweise aus der Gasphase, hergestellt werden. Es kann sich hierbei etwa um Sprühen, Drucken oder ein Vakuumabscheideverfahren, insbesondere PVD (Sputtern oder Aufdampfen), PECVD oder CVD handeln.

Auf diese Weise lässt sich eine Halbleiterschicht auch mit einer größeren Schichtdicke realisieren.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine schematische Darstellung einer Versuchszelle, die als Silizium-Luft-Batterie in einem Edelstahlgehäuse ausgebildet ist;
- Fig. 2: verschiedene Entladungskurven der Dünnfilm-Siliziumbatterien gemäß Fig. 1;
- Fig. 3: eine perspektivische Darstellung des schematischen Aufbaus einer gewickelten Silizium-Luft-Batterie;
- Fig. 4: den Aufbau einer Lithium-Ionen-Sekundärbatterie mit einer erfindungsgemäßen Elektrode und Separator zwischen den beiden Elektroden in schematischer Darstellung;
- Fig. 5a,b: das Prinzip der Veränderung der Porosität einer Siliziumschicht durch lokale Veränderung der Dotierung durch Laserbestrahlung in der Aufsicht und im Querschnitt;
- Fig. 6a,b: einen Querschnitt durch eine Siliziumschicht mit lokal durch Bestrahlung erhöhter Porosität und mit lokal durch Bestrahlung stabilisierten Bereichen;
- Fig. 7: eine Siliziumschicht in Gitterstruktur mit lokal durch Bestrahlung stabilisierten Bereichen und
- Fig. 8: eine rasterelektronenmikroskopische Aufnahme einer Siliziumschicht mit einem unbestrahlten Bereich mit geringer Porosität und einem mittels Laser bestrahlten Bereich mit hoher Porosität.

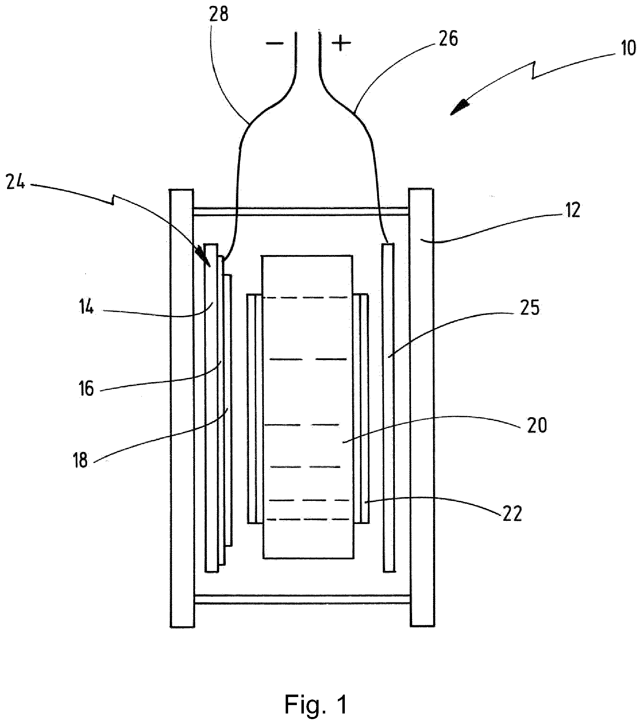

In Fig. 1 ist der Aufbau einer Versuchszelle in Form einer Silizium-Luft-Batterie schematisch dargestellt und insgesamt mit der Ziffer 10 bezeichnet.

In einem Gehäuse 12 aus Edelstahl ist ein Substrat 14 in Form einer Glasplatte angeordnet. Das Substrat 14 ist mit einer elektrisch leitfähigen Schicht 16 versehen, auf der eine dotierte, mikrokristalline Siliziumschicht mit einer bestimmten Porosität abgeschieden ist. Als Elektrolyt 20 ist eine Lösung aus KOH mit einer Stärke von 0,01 M vorgesehen, die durch eine Gummidichtung 22 eingeschlossen ist. Die dotierte Silizium-Dünnschicht auf dem metallisierten Substrat 14 bildet die erste Elektrode 24, die über einen Anschluss 28 nach außen geführt ist. Die Luftelektrode 25 bildet die zweite Elektrode, die über einen Anschluss 26 nach außen geführt ist.

Die Fig. 1 bis 3 betreffen eine nicht wiederaufladbare Silizium-Luft-Batterie, bei der die aus einer dotierten Silizium-Dünnschicht bestehende Anode 24 während der Entladung nach und nach aufgebraucht wird. In einer Silizium-Luft-Batteriezelle gibt es grundsätzlich zwei elektrochemische Reaktionen, nämlich zum einen die Batterieentladungsreaktion als die Quelle von Stromfluss zwischen den Elektroden und zum zweiten die Siliziumkorrosion (Selbstentladung) durch Auflösung der Silizium¬elektrode im alkalischen Elektrolyten. Der Entladungsprozess kann beschrieben werden als:

| | |
|---|---|
| Anode: | Si + 4OH-¬ -> Si(OH)4 + 4E- (1) |
| Kathode: | O2 + 2H2O + 4 E--> 4OH-(2). |

Dagegen stellt sich die Korrosion (Selbstentladung) wie folgt dar:

Si + 2OH- + 2H2O -> SiO2(OH)2-2 + 2H2 (3).

Wie bei Zellen auf Waferbasis tritt auch bei der Dünnschicht-Zelle die Bildung des Oxidationsproduktes Si(OH)4 an der Anode auf. Der alkalische Elektrolyt löst dieses Oxid auf, sobald es gebildet wird. Deshalb gibt es einen kontinuierlichen und dauerhaften Entladungsprozess, so bald und so lange Silizium in Kontakt mit dem Elektrolyten steht.

### Beispiele

### Beispiel 1

Bei der Batterie 10 gemäß Fig. 1 wurde als Substrat 14 eine Glasplatte mit einer Beschichtung aus leitfähigem transparentem Metalloxid (Handelsname Asahi-U) verwendet, die als elektrische Kontaktierungsschicht diente. Die Texturierung des Asahi-U Kontaktes vermeidet ein Ablösen der später darauf abgeschiedenen Siliziumschicht. Die Luftelektrode 25 auf der rechten Seite der Batterie 10 besteht aus Polytetrafluorethylen-Pulver (PTFE-Pulver) und Carbon Black (0,45 bis 0,5 g/cm2 geladen), katalysiert durch Mangandioxid und auf ein Nickel-Gitter mit einer Maschenweite von 200 Mesh gepresst. Eine mikroporöse Schicht aus PTFE wurde auf der Luftseite der Elektrode angebracht. Ein Separator ist auf der Elektrolytseite angebracht. Die Luftelektrode wurde von Electric Fuel Inc. geliefert.

Für die Abscheidung von n-Typ-dotierten Dünnschichten aus amorphem Silizium (a-Si) bzw. aus Siliziumcarbid (a-SiC) wird ein PECVD-Verfahren bei einer Temperatur von ungefähr 170°C unter Verwendung von Silan (SiH4) als Siliziumquelle, Phosphin in Silan (2 % PH3/SiH4) als Dotiergas, sowie ggf. Methan (CH4) als Kohlenstoffquelle verwendet. Die Abscheiderate beträgt 10 nm/min. Auf diese Weise wird eine 500 nm dicke, n-Typ-dotierte amorphe Silizium- oder Siliziumcarbidschicht auf dem elektrisch leitfähigen Substrat 14 erzeugt. Die dotierte a-Si-Schicht bzw. a-SiC-Schicht wurden mit unterschiedlichen Leitfähigkeiten und Kohlenstoffgehalten abgeschieden. Die aktive Fläche der daraus aufgebauten Primärbatterie-Zelle beträgt 4,5 cm2, was durch den Durchmesser der Gummidichtung 22 gemäß Fig. 1 begrenzt ist. Bei den Entladungsversuchen werden Batterien mit unterschiedlichen Elektrolytkonzentrationen und Entladungsstromdichten mit einem Keithley 2400 Series Source Meter im "bias current mode" verwendet.

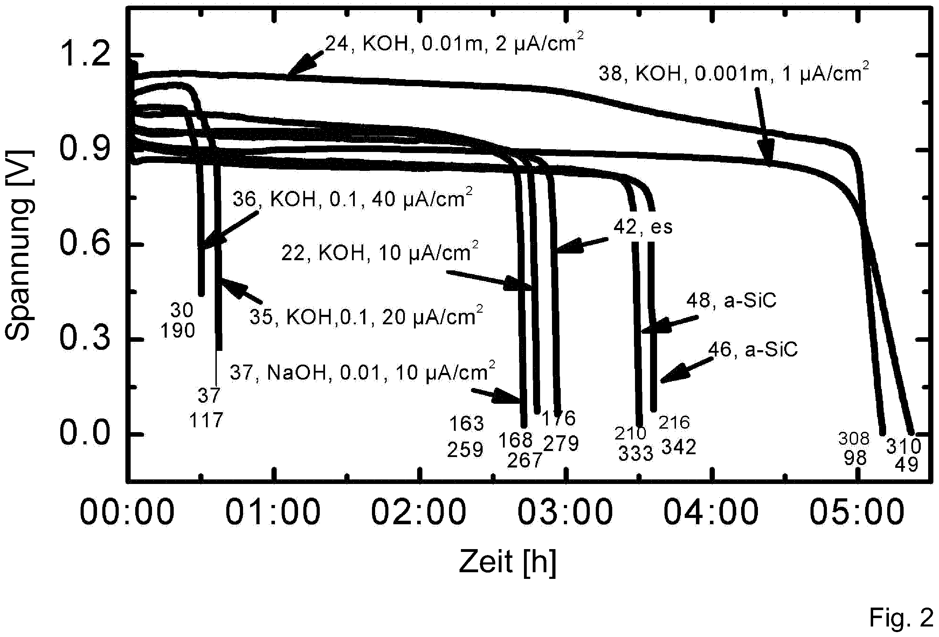

Fig. 2 zeigt Entladungskurven der a-Si- und a-SiC-Batterien mit unterschiedlichen Elektrolyten, Konzentrationen und Entladungsstromdichten. Vor der Entladung wurden alle Proben einem Ätzen in einer HF-Lösung von kleiner 1 % ausgesetzt, um Oxide zu entfernen. Tabelle 1 zeigt die spezifische Kapazität der Si-Primärbatterien für die verschiedenen Entladungsvorgänge gemäß Fig. 2. Die spezifische Kapazität wurde dabei mit Hilfe des bekannten Volumens der a-Si-Schichten bzw. a-SiC-Schichten und einer Dichte von 2,1 g/cm3 berechnet. Bei der a-SiC-Schicht gemäß Beispiel 46, also a-SiC mit 0,01 M KOH und einem Entladestrom von 10 µA/cm2 wurde eine spezifische Kapazität von 342 Ah/kg bestimmt. Die Entladungskurven zeigen, dass es keine große Differenz zwischen der Verwendung von KOH oder NaOH als Elektrolyt gibt.

**Tab. 1**

| Proben-Nr. | Abscheidegase (sccm) SiH₄/PH₃/CH₄ | n a-Si/SiC-Leitfähigkeit (Ω.cm) | Entladungsstromdichte [µA/cm²] | Elektrolytkonzentration [M] | spezifische Kapazität [Ah/kg] |
|---|---|---|---|---|---|
| 38 | 3/3/0 (a-Si) | 440 | 1 | KOH, 0,001 | 49 |
| 24 | 3/3/0 (a-Si) | 440 | 2 | KOH, 0,001 | 98 |
| 22 | 3/3/0 (a-Si) | 440 | 10 | KOH, 0,001 | 267 |
| 37 | 3/3/0 (a-Si) | 440 | 10 | NaOH, 0,01 | 259 |
| 42 | 3/3/0 (a-Si) | 440 | 10 | KOH, 0,1 | 279 |
| 35 | 3/3/0 (a-Si) | 440 | 20 | KOH, 0,1 | 117 |
| 36 | 3/3/0 (a-Si) | 440 | 40 | KOH, 0,1 | 190 |
| 46 | 3/3/1 (a-SiC) | 610 | 10 | KOH, 0,01 | 342 |
| 48 | 3/3/0 (a-Si) | 2135 | 10 | KOH, 0,01 | 333 |

Wie in den Gleichungen (1) bis (3) oben dargestellt, wird ein Teil des Siliziums als Batteriebrennstoff verbraucht, während der Rest durch den Selbstentladungsprozess verbraucht wird. Bei der Batteriezelle gemäß Beispiel 22 von Tabelle 1 aus dotiertem a-Si mit einer spezifischen Kapazität von 267 Ah/kg unter Verwendung von 0,01 M KOH als Elektrolyt und einer Entladungstromdichte von 10 µA/cm2 wurden nur ungefähr 7 % des abgeschiedenen Materials als Batteriebrennstoff genutzt. Die gemessene Selbstentladungsrate von ungefähr 2,5 mm/min von dotiertem a-Si in 0,01 M KOH begrenzt die spezifische Kapazität des Materials. Bei a-SiC ergibt sich eine bessere Nutzung, vergleiche Probennummern 46 und 48 gemäß Tabelle 1. Hierbei wurden ungefähr 9 % des a-SiC-Materials oxidiert und dienten als Brennstoff für die Batteriereaktion. a-SiC zeigt eine höhere spezifische Energie infolge der geringeren Selbstentladungskorrosionsrate, da Silizium-Kohlenstoff-Bindungen stärker sind als die Silizium-Wasserstoff-Bindungen.

### Beispiel 2

Durch eine lokale gepulste Laserbestrahlung der a-Si-Schichten bzw. a-SiC-Schichten können bei der Abscheidung der Schichten eingeschlossene Gase freigesetzt werden und so die Porosität erhöht werden.

Hierzu wird beispielsweise eine Laserstrahlung mit einem Linienfokus und der Wellenlänge λ = 532 nm bei einer Pulswiederholungsfrequenz f = 20 kHz verwendet. Hierbei werden die in der Schicht befindlichen Gasmoleküle bzw. Gasatome stark erhitzt. Durch die Temperaurzunahme steigt der Gasdruck und sprengt das umliegende Silizium. Die so entstehenden Poren haben eine Größe im Mikrometer-Bereich. Die Porosität ist durch die Energiedichte der Einstrahlung durch den Laser kontrollierbar. Die Pulsdauern liegen beispielsweise zwischen 210 und 230 Nanosekunden mit einer Pulsenergiedichte Ep = 0,47 Jcm-2. Die Linienfokusbreite liegt bei 4,5 µm.

Die Entladungsstromdichte wird durch die Vergrößerung der Porosität der Schichten durch Laserbestrahlung erhöht. Bei gleichbleibender spezifischer Kapazität, die durch das vorhandene Siliziumvolumen begrenzt wird, verringert sich dabei jedoch die Einsatzdauer der Si-Primärbatterie.

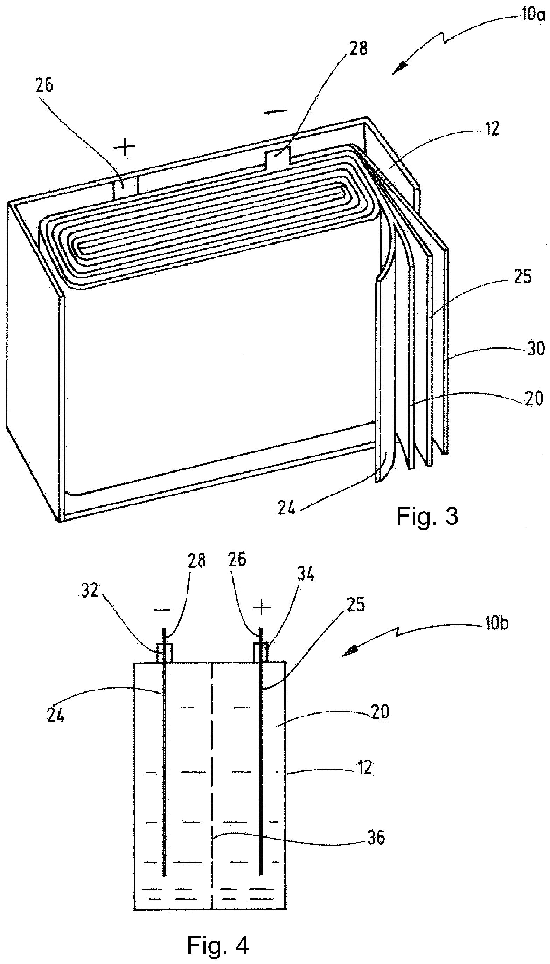

Fig. 3 zeigt ein Schema eines Aufbaus einer Silizium-Luft-Batterie in gewickelter Form. Hierbei wird eine dünne Siliziumschicht auf einem langen flexiblen Substrat (vorzugsweise metallisierter Kunststoff) abgeschieden. Die so erzeugte erste Elektrode ist durch 24 angedeutet. Parallel dazu ist eine Luftelektrode 25 vorgesehen, wobei dazwischen ein Elektrolyt 20 in Gelpastenform angeordnet ist. Als äußere Schicht ist eine Schaumstoffschicht 30 vorgesehen, die den Zutritt von Luft zur Diffusion zur Luftkathode 25 erlaubt. Die Schichten 24, 20, 25, 30 sind übereinanderliegend aufgewickelt und im Gehäuse 12 aus Edelstahl eingeschlossen, wobei die Anschlüsse 26, 28 nach außen geführt sind.

### Beispiel 3

Der grundsätzliche Aufbau einer erfindungsgemäßen Sekundärbatterie ist in Fig. 4 dargestellt und insgesamt mit 10b bezeichnet. Im Gehäuse 12 sind eine erste Elektrode 24 und eine zweite Elektrode 25 angeordnet und über zugeordnete Gehäusedurchführungen 32, 34 nach außen zu den Anschlüssen 28, 26 verbunden. Im Inneren der Batterie 10b befindet sich die Elektrolytlösung 20. Zwischen den Elektroden 24, 25 befindet sich ein Separator 36.

Eine derartige Sekundärbatterie 10b verwendet eine dotierte, mikrokristalline Siliziumschicht an der ersten Elektrode 24, die eine kontrollierte Porosität aufweist und dreidimensional mikrostabilisiert ist.

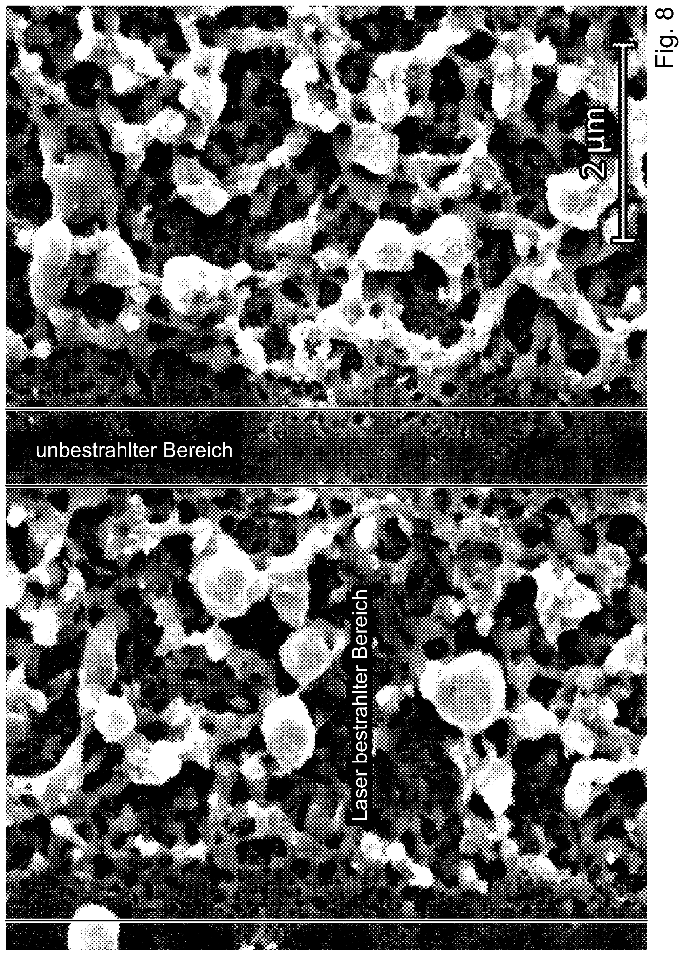

Figur 8 zeigt eine mit Hilfe einer Laserbestrahlung porös gemachte Silizium-Schicht. Zuerst erfolgt die Abscheidung einer 300 nm dicken Halbleiterschicht aus phosphordotiertem Silizium mittels Sputtern auf ein Edelstahlsubstrat der Dicke d = 25 µm. Eine lokale gepulste Laserbestrahlung der Halbleiterschicht mit einem Linienfokus und der Wellenlänge λ = 532 nm bei einer Pulswiederholungsfrequenz f = 20 kHz macht diese während der Umwandlung vom amorphem in den kristallinen Zustand porös. Hierbei werden die in der Schicht befindlichen Gasmoleküle bzw. Gasatome stark erhitzt. Durch die Temperaurzunahme steigt der Gasdruck und sprengt das umliegende Silizium. Die so entstehenden Poren haben eine Größe im Mikrometer-Bereich. Die Porosität ist durch die Energiedichte der Einstrahlung durch den Laser kontrollierbar. Die Pulsdauern liegen in diesem Beispiel zwischen 210 und 230 Nanosekunden mit einer Pulsenergiedichte Ep = 0,47 Jcm-2. Die Linienfokusbreite liegt bei 4,5 µm. Die nicht bestrahlten Bereiche weisen praktisch keine Poren auf und dienen zur Stabilisierung der Schicht. Die Form der bestrahlten bzw. porösen Bereiche sowie die der unbestrahlten nicht porösen Bereiche kann durch optische Abbildung der Laserstrahlung nahezu beliebig eingestellt werden.

### Beispiel 4

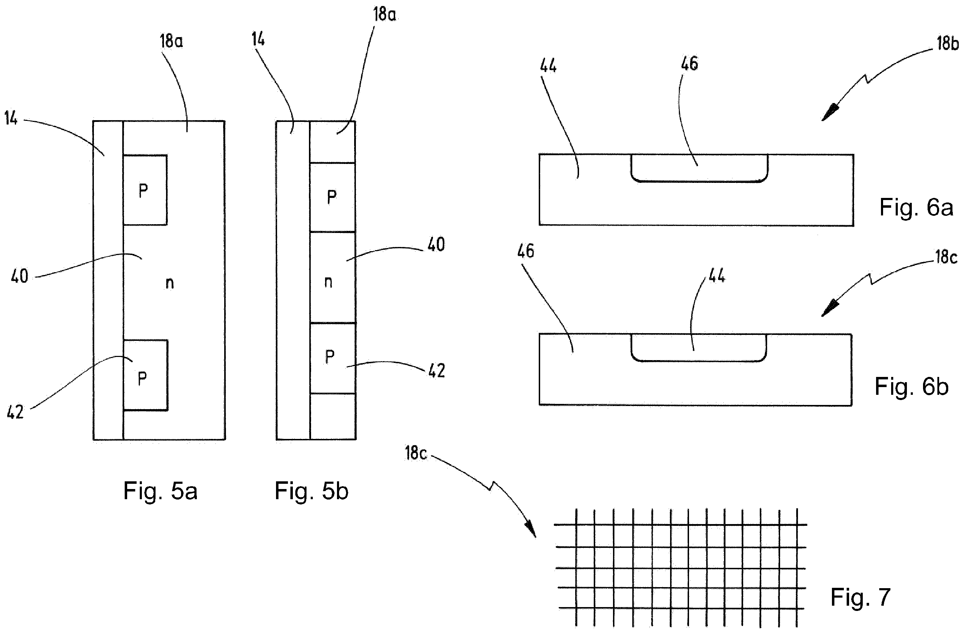

Figur 5 a) und b) zeigen die Stabilisierung einer mikrokristallinen Siliziumschicht 18a mit Hilfe unterschiedlich dotierter n- und p-Typ Gebiete. Die lokale Dotierung kann hier ebenfalls mit Hilfe einer Laserbestrahlung erfolgen. Zunächst erfolgt eine flächige Beschichtung mit einem Dotiermittel und anschließend die Laserbestrahlung. Die verbleibende, nicht bestrahlte Beschichtung wird anschließend wieder entfernt.

### Beispiel 5

Figur 6a) zeigt eine erste Möglichkeit zur Herstellung einer mi¬kro¬stabilisierten Schicht 18b auf Siliziumbasis: Ausgehend von einer stabilen nicht porösen Si-Schicht 44 wird diese durch Laserbestrahlung lokal porös gemacht, so dass poröse Bereiche 46 entstehen.

### Beispiel 6

Fig. 6b) zeigt eine zweite Möglichkeit zur Herstellung einer mi¬kro¬stabilisierten Schicht 18c auf Siliziumbasis: Ausgehend von einer porösen Schicht 46, wird diese durch Laserbestrahlung aufgeschmolzen, wodurch diese anschließend rekristallisiert. Der rekristallisierte Bereich 44 ist nicht mehr porös.

Auf diese Weise lässt sich eine dreidimensionale poröse Gitterstruktur 18c erzeugen, die besonders zur Ionen-Aufnahme, insbesondere zur Aufnahme von Lithium-Ionen geeignet ist, und die in regelmäßigen Abständen verstärkt ist, so dass ein Zusammenhalt auch von größeren Strukturen gewährleistet ist.

Eine derartige Struktur 18c ist beispielhaft in Fig. 7 skizziert.

Durch die kontrollierte Porosität und dreidimensionale Mikrostabilisierung der Siliziumschicht ergibt sich ein besonders hohes Aufnahmevermögen für Lithiumionen bei gleichzeitig erhöhter mechanischer Stabilität, wodurch die Herstellung von Lithium-Ionen-Sekundärbatterien mit hoher Kapazität und Langzeit-Zyklenfestigkeit erreicht werden kann.

## Patentansprüche

1. Verfahren zum Herstellen einer Batterie, mit den Schritten:
(a) Herstellen einer ersten Elektrode (24) durch Bereitstellen eines Substrats (14) und Abscheiden mindestens einer Halbleiterschicht (18, 18a,b,c) auf Siliziumbasis mit einer bestimmten Porosität, insbesondere einer dotierten mikrokristallinen Siliziumschicht, die Zusätze von Ge, Sn und/oder C enthalten kann, auf dem Substrat (14);
(b) Mikrostabilisieren der Halbleiterschicht (18, 18a,b,c) durch volumenmäßige oder lokale Variation der Porositätzur Erhöhung der lonen-Aufnahmekapazität und/oder der mechanischen Stabilität;
(c) Anordnen der ersten Elektrode (24) zusammen mit einer zweiten Elektrode (25) und einem Elektrolyten (20) in einem Gehäuse (12);
(d) Kontaktieren der beiden Elektroden (24, 25) und Verbinden mit externen, von außerhalb des Gehäuses (12) zugänglichen Anschlüssen (26, 28);
wobei die Halbleiterschicht (18, 18a,b,c) mittels eines Lasers bestrahlt wird, um die Porosität aktiver Bereiche zur Aufnahme von Ionen, insbesondere von Lithium-Ionen, durch eine Freisetzung von Gas aus der Halbleiterschicht zu vergrößern.

2. Verfahren nach Anspruch 1, bei dem die Halbleiterschicht (18b) zur Erzeugung von Poren durch gasförmige Freisetzungen von in der abgeschiedenen Halbleiterschicht (18b) eingebauten Atomen oder Molekülen mittels des Lasers bestrahlt wird.

3. Verfahren nach einem der Ansprüche 1 oder 2, bei dem im Schritt (a) eine Dotierungsschicht auf die Oberfläche der Halbleiterschicht (18a) aufgebracht wird und im Schritt (b) mittels eines Lasers eine lokale Dotierung (42) erzeugt wird, die eine von den übrigen Bereichen (40) der Halbleiterschicht (18, 18a) abweichende Ionen-Aufnahmekapazität aufweist.

4. Verfahren nach einem der vorhergehenden Ansprüche, bei dem die Halbleiterschicht (18c) zur Erzeugung von lokal verfestigten Gitterpunkten durch lokale Laser-Kristallisation mittels des Lasers bestrahlt wird.

5. Verfahren nach einem der vorhergehenden Ansprüche, bei dem mehrere Schichten nacheinander übereinander abgeschieden und behandelt werden.

6. Verfahren nach einem der vorhergehenden Ansprüche, bei dem die Halbleiterschicht (18c) in Form eines dreidimensionalen Skeletts mit einer Gitterweite von 0,5 bis 100 Mikrometer, vorzugsweise von 5 bis 20 Mikrometer, mikrostabilisiert wird.

7. Verfahren nach einem der vorhergehenden Ansprüche, bei dem die Halbleiterschicht (18, 18a,b,c) durch ein Dünnschichtabscheideverfahren abgeschieden wird.

8. Verfahren nach einem der vorhergehenden Ansprüche, bei dem die Halbleiterschicht (18, 18a,b,c) durch Sprühen, Drucken oder ein Vakuumabscheideverfahren, insbesondere durch PVD (insbesondere Sputtern oder Aufdampfen), PECVD oder CVD abgeschieden wird.

9. Verfahren nach Anspruch 8, bei dem die Halbleiterschicht (18, 18a,b,c) mittels PECVD mit Anregungsfrequenzen im Bereich von 10 kHz bis 500 MHz oder im Mikrowellenbereich abgeschieden wird.

10. Verfahren nach einem der vorhergehenden Ansprüche, bei dem als Substrat (14) eine bevorzugt texturierte Folie verwendet wird, vorzugsweise eine Metallfolie oder eine Kunststofffolie.

11. Verfahren nach Anspruch 10, bei dem als Substrat (14) eine Kunststofffolie verwendet wird, die in einem nachfolgenden Schritt metallisiert und kontaktiert wird, wobei zur Metallisierung zunächst eine Haftvermittlerschicht, etwa aus Titan, appliziert werden kann.

12. Verfahren nach einem der vorhergehenden Ansprüche, bei dem die erste Elektrode (24) mit einer zweiten Elektrode (25) in Form einer Luftkathode zu einer Primärbatterie kombiniert wird.

13. Verfahren nach einem der Ansprüche 1 bis 12, bei dem die Batterie als Sekundärbatterie hergestellt wird, wobei zwischen den Elektroden (24, 25) ein Separator (36) angeordnet wird.

## Claims

1. A method for producing a battery, comprising the steps of:
(a) preparing a first electrode (24) by providing a substrate (14) and depositing onto the substrate (14) at least one silicon-based semiconductor layer (18, 18a,b,c) of a specific porosity, in particular a doped micro-crystalline silicon layer that may comprise additions of Ge, Sn and/or C;
(b) micro-stabilizing of the semiconductor layer (18, 18a,b,c) by varying the porosity by volume or locally, the doping or the crystallization, for increasing the ion-absorption capacity and/or the mechanical stability;
(c) arranging the first electrode (24) together with a second electrode (25) and an electrolyte (20) within a housing (12);
(d) contacting the two electrodes (24, 25) and connecting with external terminals (26, 28) accessible from outside the housing (12);
wherein the semiconductor layer (18, 18a,b,c) is irridiated by means of a laser for increasing the porosity of active regions for absorbing ions, in particular lithiumions, by releasing gas from the semiconductor layer.

2. The method of claim 1, wherein the semiconductor layer (18b) is irridiated by means of a laser for generating pores by freeing gases from atoms or molecules contained within the deposited semiconductor layer (18b).

3. The method of claim 1 or 2, wherein in step (a) a doping layer is deposited on the surface of the semiconductor layer (18a), and in step (b) a local doping (42) is generated by means of a laser, having a different ion-absorption capacity than the remaining regions (40) of the semiconductor layer (18, 18a).

4. The method of any of the preceding claims, wherein the semiconductor layer (18c) is irridiated by means of a laser for generating locally strengthened grid points by local laser crystallization.

5. The method of any of the preceding claims, wherein several layers are deposited subsequently one over the other and treated.

6. The method of any of the preceding claims, wherein the semiconductor layer (18c) in the shape of a three-dimensional skeleton having a grid width of 0.5 to 100 micrometers, preferably 5 to 20 micrometers, is micro-stabilized.

7. The method of any of the preceding claims, wherein the semiconductor layer (18, 18a,b,c) is deposited by a thin-layer deposition method.

8. The method of any of the preceding claims, wherein the semiconductor layer (18, 18a,b,c) is deposited by spraying, printing, or by a vacuum deposition method, in particular by PVD (in particular sputtering or vapor deposition), PECVD, or CVD.

9. The method of claim 8, wherein the semiconductor layer (18, 18a,b,c) is deposited by means of PECVD with excitation frequencies in the range of 10 kHz to 500 MHz, or in the microwave range.

10. The method of any of the preceding claims, wherein a preferably textured foil, preferably a metal foil or a plastic foil, is used as the substrate (14).

11. The method of claim 10, wherein a plastic foil is used as the substrate (14) which is metallized in a subsequent step and contacted, wherein for metallizing initially a bonding agent, e.g. of titanium, can be applied.

12. The method of any of the preceding claims, wherein the first electrode (24) is combined with the second electrode (25) configured as an air-cathode to a primary battery.

13. The method of any of claims 1 to 12, wherein the battery is produced as a secondary battery, wherein between the electrodes (24, 25) a separator (36) is arranged.

## Revendications

1. Procédé de fabrication d'une batterie, comprenant les étapes consistant à :
(a) produire une première électrode (24) en fournissant un substrat (14) et en déposant sur le substrat (14) au moins une couche semi-conductrice à base de silicium (18, 18a, 18a, b, c) ayant une certaine porosité, en particulier une couche de silicium microcristallin dopé, qui peut contenir des additifs de Ge, Sn et/ou C ;
(b) microstabiliser la couche semi-conductrice (18, 18a, 18a,b,c) par variation volumétrique ou locale de la porosité pour augmenter la capacité d'absorption d'ions et/ou la stabilité mécanique ;
(c) placer la première électrode (24) avec une seconde électrode (25) et un électrolyte (20) dans un boîtier (12) ;
(d) mettre en contact les deux électrodes (24, 25) et les connecter à des bornes externes (26, 28) accessibles depuis l'extérieur du boîtier (12) ;
dans lequel la couche semi-conductrice (18, 18a, 18a,b,c) est irradiée au moyen d'un laser pour augmenter la porosité des régions actives afin qu'elles reçoivent des ions, en particulier des ions lithium, par libération de gaz depuis la couche semi-conductrice.

2. Procédé selon la revendication 1, dans lequel la couche semi-conductrice (18b) est irradiée par laser pour produire des pores par libération gazeuse d'atomes ou de molécules intégrées dans la couche semi-conductrice déposée (18b).

3. Procédé selon l'une des revendications 1 ou 2, dans lequel, lors de l'étape (a), une couche de dopage est appliquée à la surface de la couche semi-conductrice (18a) et, lors de l'étape (b), un dopage local (42) est produit au moyen d'un laser, lequel dopage local a une capacité d'absorption d'ions différente de celle des autres régions (40) de la couche semi-conductrice (18, 18a).

4. Procédé selon l'une des revendications précédentes, dans lequel la couche semi-conductrice (18c) est irradiée par cristallisation locale au laser au moyen du laser pour produire localement des points de grille solidifiés.

5. Procédé selon l'une des revendications précédentes, dans lequel plusieurs couches sont déposées l'une sur l'autre et traitées l'une après l'autre.

6. Procédé selon l'une des revendications précédentes, dans lequel la couche semi-conductrice (18c) est microstabilisée sous la forme d'un squelette tridimensionnel ayant une largeur de réseau de 0,5 à 100 micromètres, de préférence de 5 à 20 micromètres.

7. Procédé selon l'une des revendications précédentes, dans lequel la couche semi-conductrice (18, 18a, 18a,b,c) est déposée par un procédé de dépôt en couche mince.

8. Procédé selon l'une des revendications précédentes, dans lequel la couche semi-conductrice (18, 18a, 18a,b,c) est déposée par pulvérisation, par impression ou par un procédé de dépôt sous vide, notamment par PVD (notamment par pulvérisation ou évaporation), PECVD ou CVD.

9. Procédé selon la revendication 8, dans lequel la couche semi-conductrice (18, 18a,b,c) est déposée par PECVD avec des fréquences d'excitation se situant dans la gamme de 10 kHz à 500 MHz ou dans la gamme des micro-ondes.

10. Procédé selon l'une des revendications précédentes, utilisant en tant que substrat (14) un film de préférence texturé, de préférence une feuille métallique ou une feuille de matière plastique.

11. Procédé selon la revendication 10, dans lequel une feuille de matière plastique est utilisée en tant que substrat (14), laquelle feuille est métallisée et mise en contact lors d'une étape ultérieure, dans lequel une couche favorisant l'adhérence, par exemple en titane, est d'abord appliquée aux fins de la métallisation.

12. Procédé selon l'une des revendications précédentes, dans lequel la première électrode (24) est combinée à une seconde électrode (25) sous la forme d'une cathode à air pour former une batterie primaire.

13. Procédé selon l'une des revendications 1 à 12, dans lequel la batterie est produite en tant que batterie secondaire, dans lequel un séparateur (36) est disposé entre les électrodes (24, 25).
